## Europäisches Patentamt
## European Patent Office
## Office européen des brevets

(19)

(11) Veröffentlichungsnummer: **0 129 638**
**B1**

(12) # EUROPÄISCHE PATENTSCHRIFT

(45) Veröffentlichungstag der Patentschrift:
08.06.88

(51) Int. Cl.⁴: **B 03 B 7/00,** A 23 N 12/02

(21) Anmeldenummer: **84102420.1**

(22) Anmeldetag: **07.03.84**

(54) **Vorrichtung zum Trennen von Steinen und Kraut einerseits sowie (Zucker-)rüben andererseits eines Gemisches derselben.**

(30) Priorität: 09.03.83 DE 3308286
25.06.83 DE 3322915

(43) Veröffentlichungstag der Anmeldung:
02.01.85 Patentblatt 85/1

(45) Bekanntmachung des Hinweises auf die Patenterteilung:
08.06.88 Patentblatt 88/23

(84) Benannte Vertragsstaaten:
BE DE FR GB IT

(56) Entgegenhaltungen:
DE-C-226 087
DE-C-856 880
FR-A-926 400
FR-A-1 127 850
FR-A-1 211 192
FR-A-2 194 379
FR-A-2 228 441
FR-A-2 360 265
FR-A-2 480 623

(73) Patentinhaber: **Gerlach, Hildburg, In den Wiesen 8,
D-2730 Zeven (DE)**

(72) Erfinder: **Gerlach, Günter, verstorben, (DE)**

(74) Vertreter: **Bolte, Erich, Dipl.- Ing., c/o Meissner,
Bolte & Partner Patentanwälte Hollerallee 73,
D-2800 Bremen 1 (DE)**

LIBER, STOCKHOLM 1988

## Beschreibung

Die Erfindung betrifft eine Vorrichtung zum Trennen eines Gemisches aus (Zucker-)Rüben einerseits und Steinen sowie Kraut andererseits gemäß Oberbegriff des Patentanspruchs 1.

Die Betriebsanlagen einer Rüben-Zuckerfabrik sind mit umfänglichen und komplexen Vorrichtungen für die Vorbehandlung der Zuckerrüben sowie für den Transport derselben auf dem Betriebsgelände ausgerüstet. Zunächst einmal geht es um den Transport der Zuckerrüben auf dem Betriebsgelände, vielfach in einem System von Rinnen, in denen die Rüben durch einen (Wasser-) Schwemmstrom gefördert werden. Von größerer Bedeutung sind aber Einrichtungen, die das als "Ernteprodukt" angelieferte Gemisch von Rüben, Kraut, Sand, Blättern und Steinen voneinander trennen der Art, daß schlußendlich gesäuberte Zuckerrüben für die Weiterverarbeitung zur Verfügung stehen.

Die Vorrichtungen für die Bearbeitung des Rübengemisches, nämlich Steinefänger, Krautfänger, Sandabsetzbecken, Rübenwaschmaschinen etc. sind üblicherweise als Einzelaggregate auf dem Betriebsgelände der Zuckerfabrik in sinnvoller Weise verteilt angeordnet. Soweit für den Transport der Zuckerrüben ein Schwemmstromsystem eingesetzt wird, sind die vorgenannten Trennaggregate überwiegend in den Schwemmstrom eingebaut, werden also von diesem mit den Rüben und sonstigen Feststoffteilchen durchströmt.

Der vorstehende Aufbau bzw. die Anordnung der notwendigen Trenn- und Reinigungsaggregate innerhalb der Betriebsanlage der Rüben-Zuckerfabrik wird als unvorteilhaft empfunden. Zum einen können die einzelnen Aggregate nicht in eine technische Wechselbeziehung zueinander treten. Die Arbeitsweise eines Steinefängers kann nicht mit der eines Krautfängers überlagert oder in einer anderen Weise zum Zusammenwirken gebracht werden. Dies gilt insbesondere auch für die Vorrichtung nach der FR-A 12 11 192, bei der die Stein- und Krautabscheidung gemeinsam durch eine kranzartige Schöpfvorrichtung erfolgt. Es findet dabei eine einfache Schwemmabscheidung statt. Dies bedeutet, daß in einem weiteren Arbeitsgang die Steine vom Kraut getrennt werden müssen. Der zusätzliche Aufwand dafür ist augenscheinlich.

Hiervon ausgehend liegt der Erfindung die Aufgabe zugrunde, eine Vorrichtung der genannten Art so weiterzubilden, daß bei kompakter Bauweise eine definierte technische Wechselbeziehung zwischen den einzelnen Trenn- und Reinigungsaggregaten erhalten wird. Gleichzeitig ist darauf geachtet, daß der Verbrauch von Betriebsmitteln (Energie, Wasser etc.) minimal ist. Diese Aufgabe wird erfindungsgemäß durch die kennzeichnenden Merkmale des Patentanspruches 1 gelöst.

Die erfindungsgemäße Vorrichtung vereinigt somit mindestens einen Steinefänger und einen Krautfänger zu einem gemeinsamen Aggregat, welches auch gemeinsam angetrieben ist, bei dem jedoch keine Überlagerung der Arbeitsweise des Steinefängers mit der des Krautfängers stattfindet. Auf engstem Raum ist eine saubere Trennung zwischen Rüben einerseits und Kraut sowie Steinen andererseits gewährleistet.

In den Unteransprüchen sind bevorzugte konstruktive Details der erfindungsgemäßen Vorrichtung beschrieben, wobei einige der Unteransprüche Maßnahmen betreffen, die einen äußerst sparsamen Wasserverbrauch gewährleisten.

Nach einem weiteren Vorschlag der Erfindung ist der aus Steinefänger und Krautfänger bestehenden Einheit ein Waschaggregat (Waschtrommel) vor- oder nachgeordnet. Das gesamte Aggregat ist demnach für das Waschen der Rüben sowie das Abtrennen von Steinen und Kraut eingerichtet.

Der Krautfänger ist erfindungsgemäß in besonderer Weise ausgebildet, nämlich als Trommel-Krautfänger mit einem sieb- bzw. gitterförmigen Trommelmantel, an dessen Innenseite Krautfangorgane angeordnet sind. Diese sondern das Kraut infolge Umdrehung aus dem Schwemm- bzw. Wasserstrom, fördern es längs eines Teilumfangs und geben das Kraut auf einen Abförderer (Förderband), welches sich in Längsrichtung innerhalb der Trommeleinheit erstreckt.

Gemäß einer Alternative kann die Vorrichtung auch so aufgebaut sein, daß in Förder- bzw. Strömungsrichtung Steine und/oder Krautfänger der Waschtrommel vorgeordnet sind.

Weitere Merkmale der Erfindung beziehen sich auf die konstruktive Ausbildung der Waschtrommel, des Steinefängers, sowie des Krautfängers. Weiterhin beziehen sich die Unteransprüche - wie bereits oben erwähnt - auf die besondere Art der Wasserführung bzw. des Wasserumlaufs, um einen äußerst sparsamen Wasserverbrauch zu erhalten.

Ausführungsbeispiele der erfindungsgemäßen Vorrichtung werden nachfolgend anhand der Zeichnungen näher erläutert. Es zeigen:

Fig. 1 eine Vorrichtung mit Waschtrommel, Steinefänger und Krautfänger in schematischer Seitenansicht,

Fig. 2 die Vorrichtung gemäß Fig. 1 im vertikalen Längsschnitt,

Fig. 3 einen Abschnitt der Vorrichtung gemäß Fig. 1 und 2 im vertikalen Längsschnitt bei vergrößertem Maßstab,

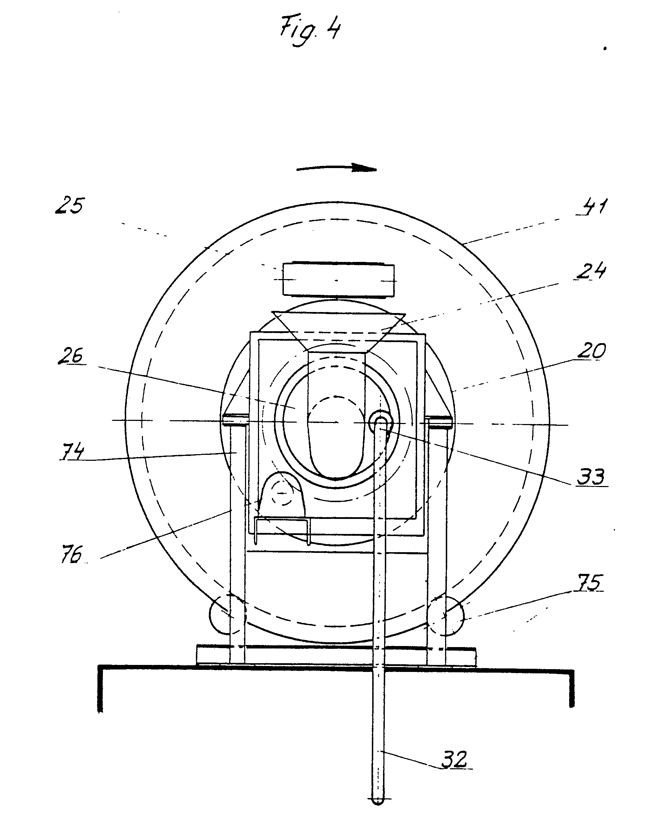

Fig. 4 eine Ansicht der Vorrichtung von der Rückseite (Eingabeseite) her,

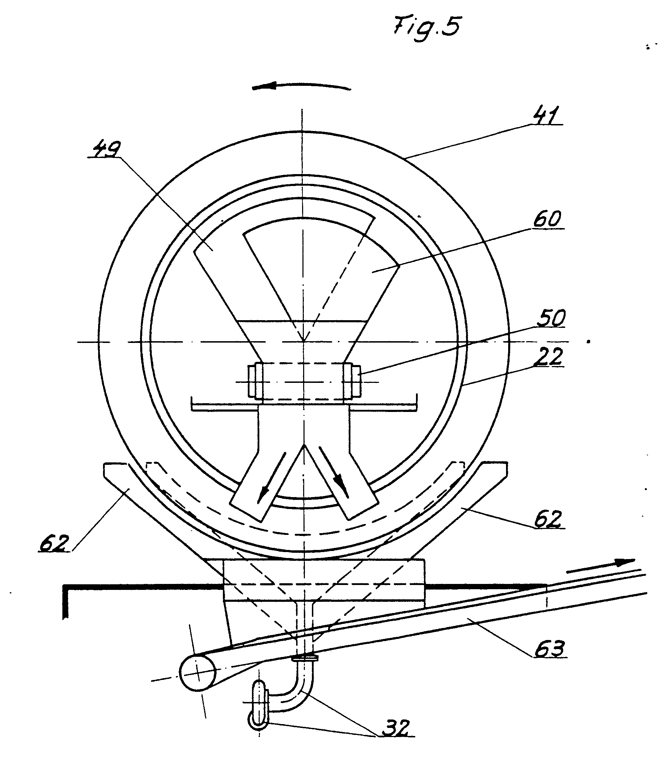

Fig. 5 eine Ansicht der Vorrichtung von der Austrittsseite her,

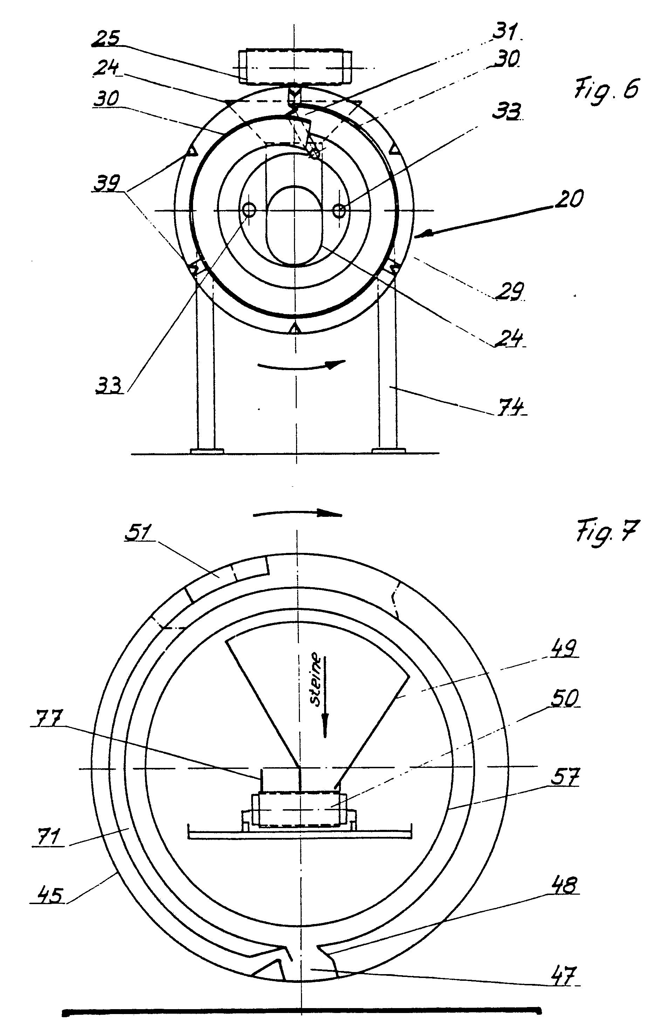

Fig. 6 einen Querschnitt VI-VI der Fig. 2 im Bereich der Waschtrommel,

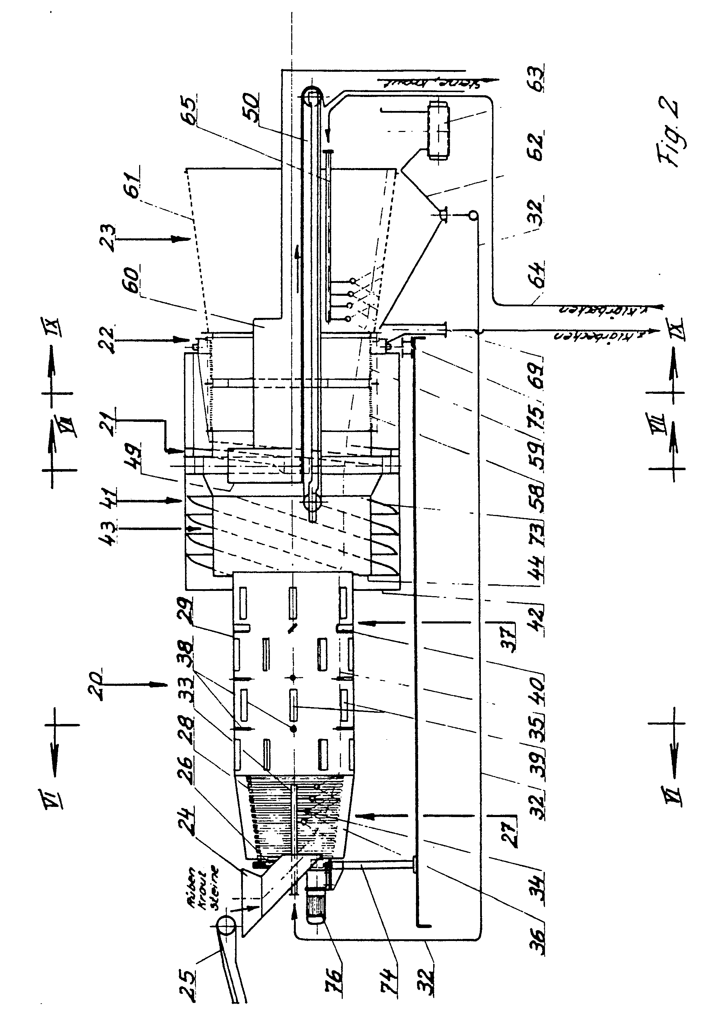

Gig. 7 einen Schnitt VII der Fig. 2 im Bereich des Steinefängers,

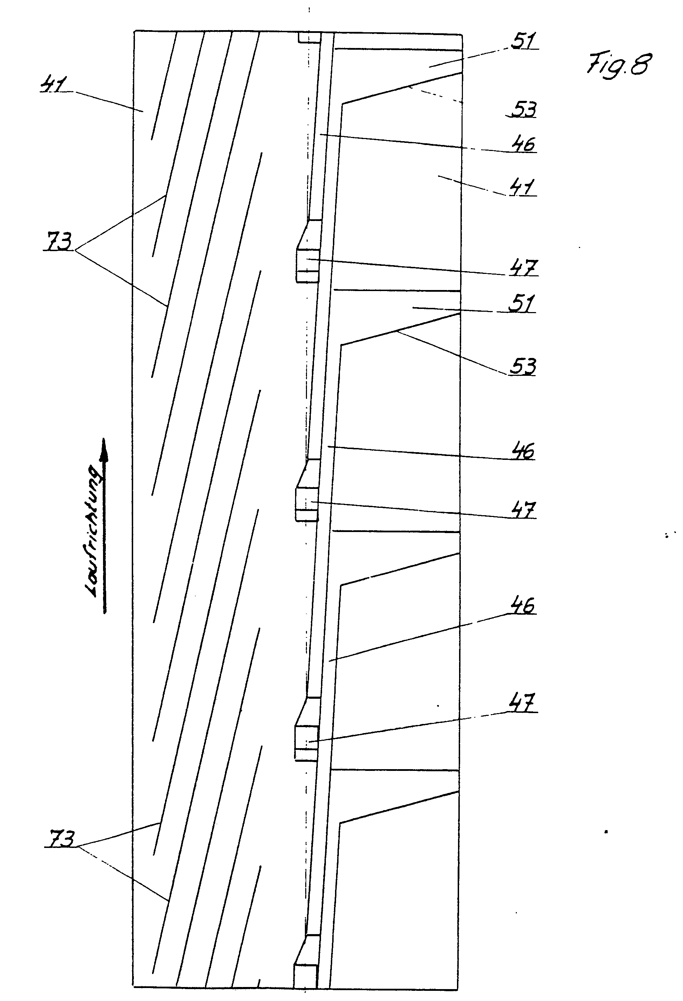

Fig. 8 eine Einzelheit des Steinefängers als Abwicklung in vergrößertem Maßstab,

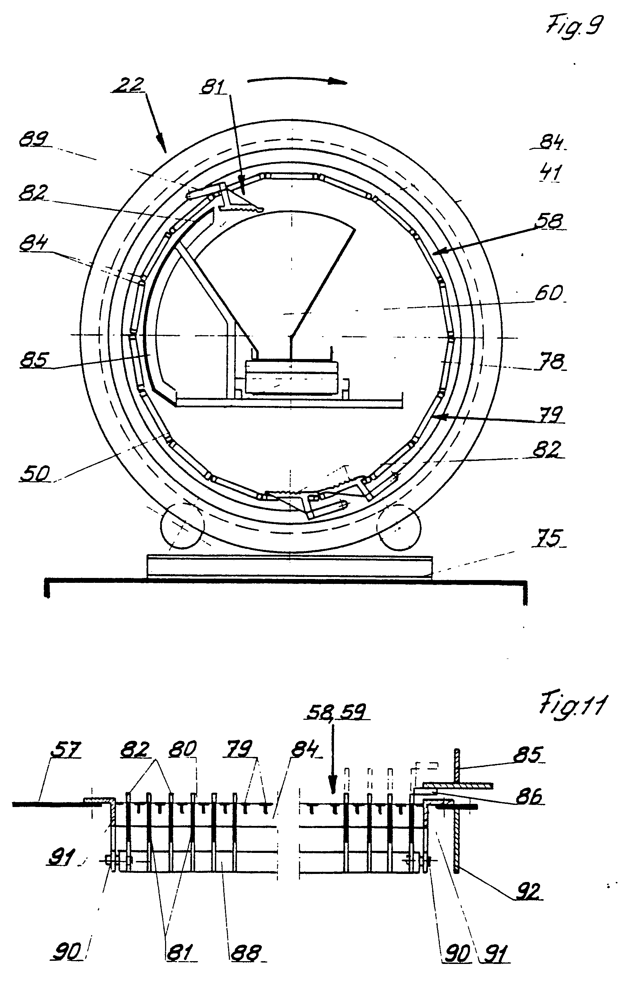

Fig. 9 einen Querschnitt IX-IX im Bereich des Krautfängers,

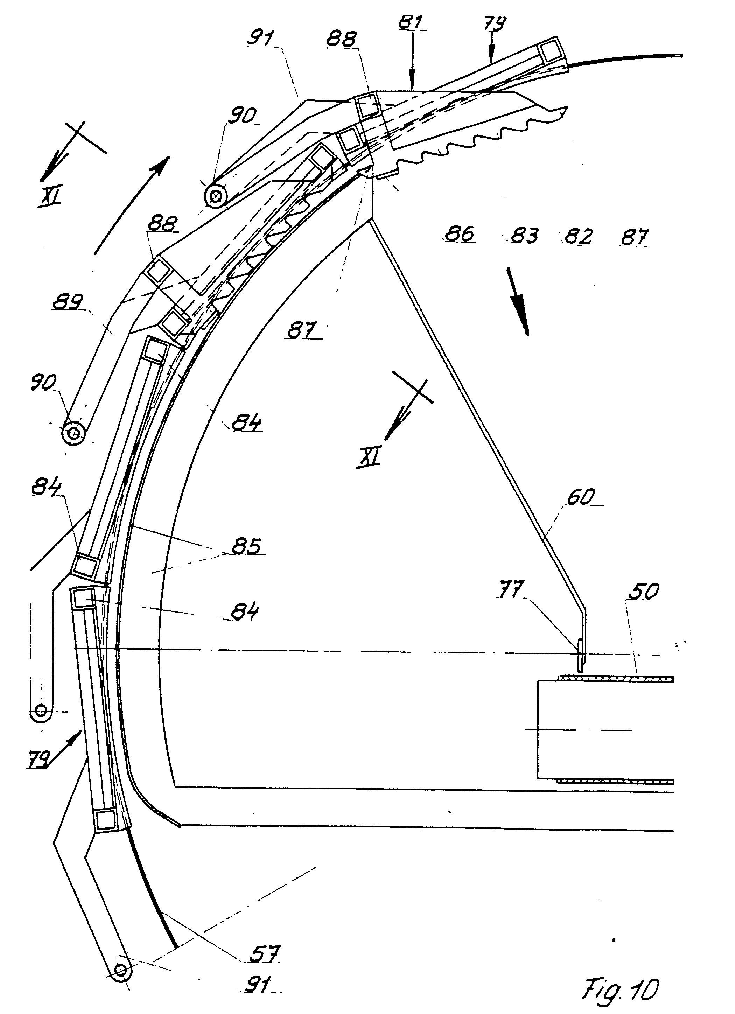

Fig. 10 eine Einzelheit des Krautfängers der Fig. 9, nämlich einen Abschnitt des Umfangs, im Querschnitt bei vergrößertem Maßstab,

Fig. 11 einen Radialschnitt XI-XI in Fig. 10,

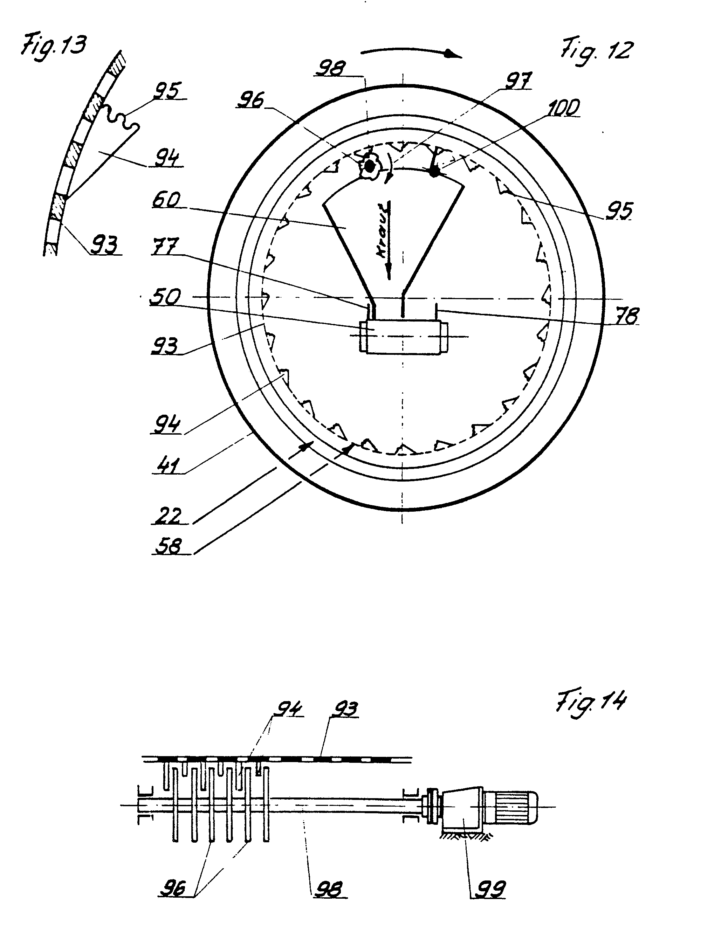

Fig. 12 ein anderes Ausführungsbeispiel eines (trommelförmigen) Krautfängers im Querschnitt,

Fig. 13 eine Einzelheit des Krautfängers gemäß Fig. 12 im Querschnitt im vergrößerten Maßstab,

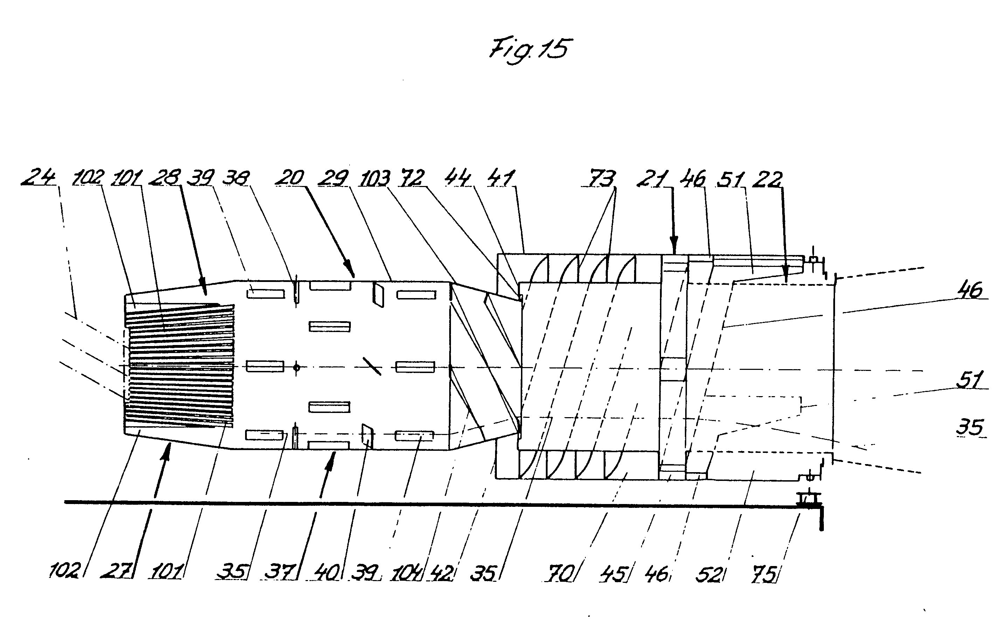

Fig. 14 eine weitere Einzelheit des Krautfängers gemäß Fig. 12 im Längsschnitt bzw. in Längsansicht,

Fig. 15 einen Teil einer Vorrichtung in einer anderen Ausführungsform im Längsschnitt,

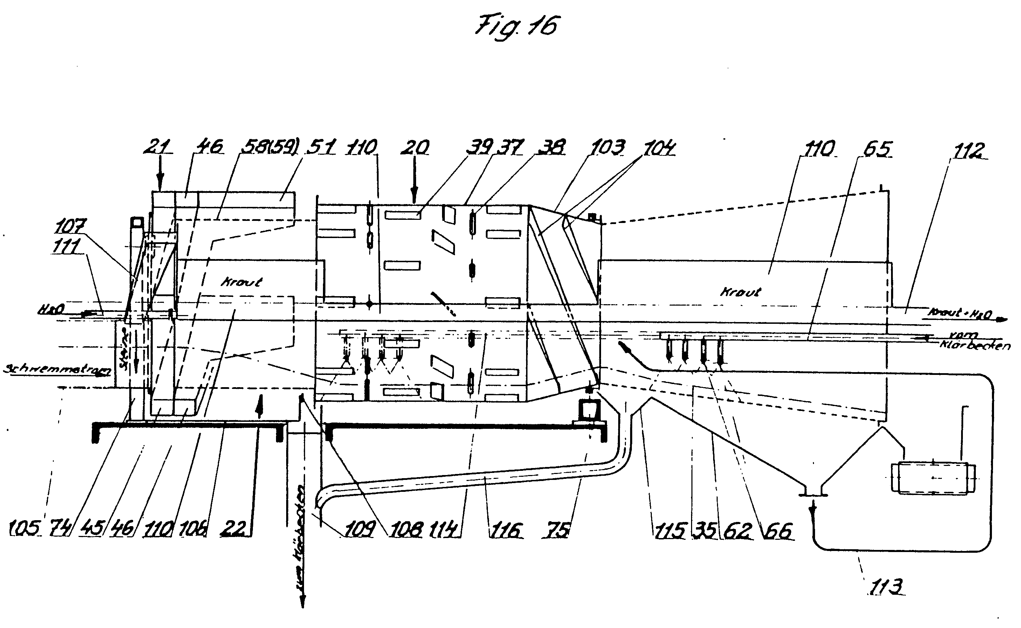

Fig. 16 eine Darstellung ähnlich Fig. 15 für ein weiteres Ausführungsbeispiel der Vorrichtung.

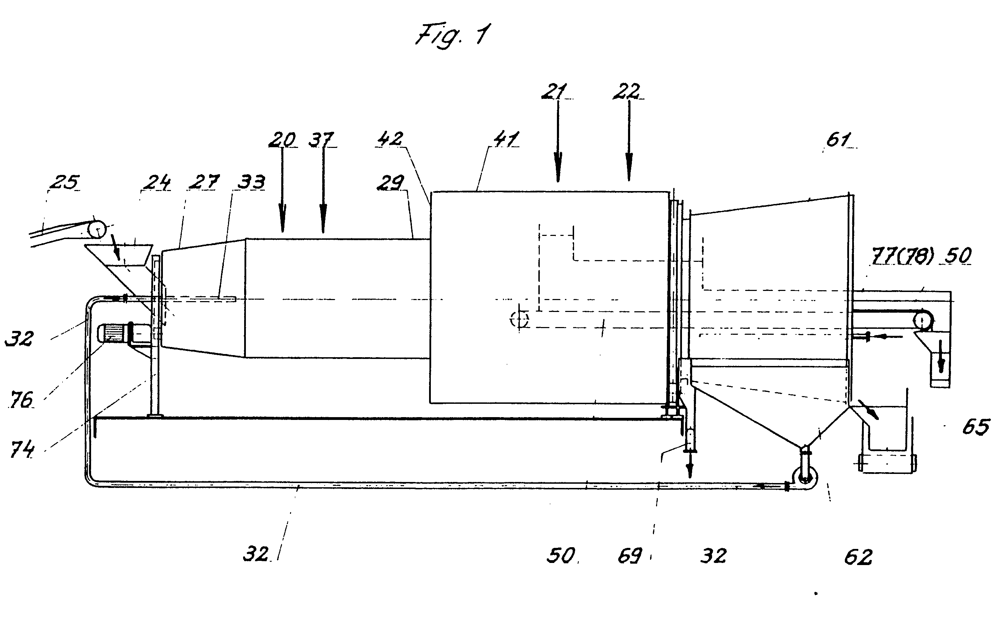

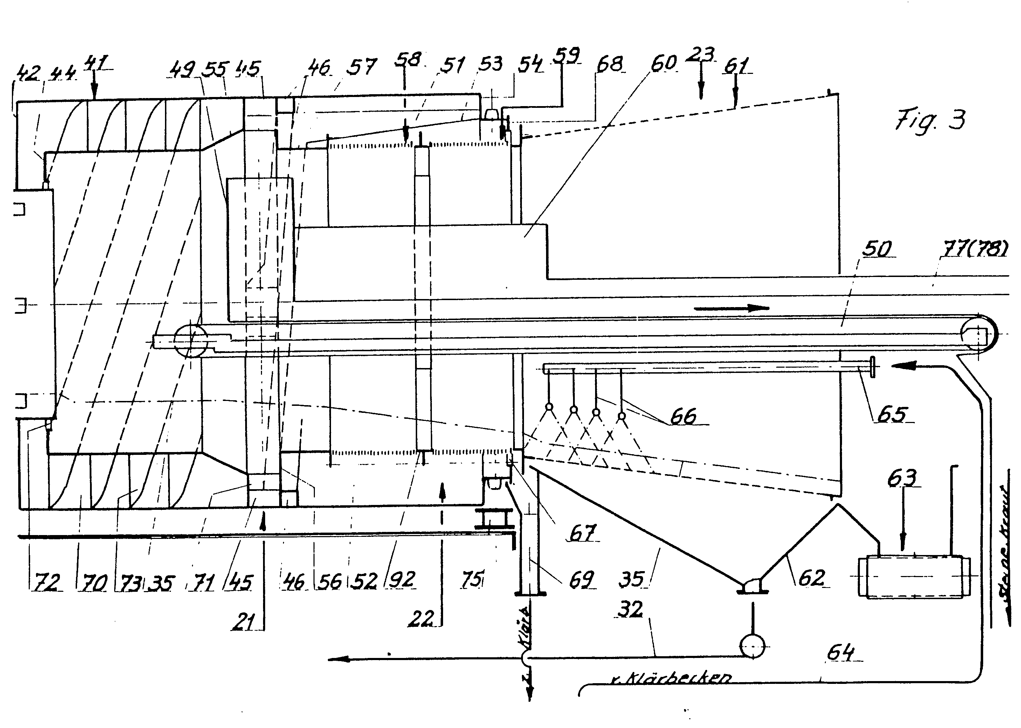

Die nachfolgend beschriebenen Ausführungsbeispiele beziehen sich auf kompakte Vorrichtungen mit Mehrfachfunktionen zum Trennen von Rüben einerseits sowie Kraut, Steinen etc. andererseits. Des weiteren werden Einzelaggregate (Steinefänger, Krautfänger, Waschmaschine etc.) in besonderer Ausgestaltung beschrieben. Die Vorrichtung gemäß Fig. 1 bis 3 ist eine Bearbeitungseinheit mit einer Rübenwaschvorrichtung in Gestalt einer Waschtrommel 20, einem Steinefänger 21 und einem Krautfänger 22. Des weiteren ist hier eine Nachwasch-Vorrichtung 23 angeschlossen.

Die Vorrichtung ist so ausgebildet, daß das Gemisch aus Rüben, Kraut, Steinen etc. im trockenen Zustand über einen Einfülltrichter 24 beispielsweise durch ein Zuförderband 25 über eine zentrische Eintrittsöffnung 26 in die Waschtrommel 20 eingeführt werden kann. In dieser wird das Gemisch in Längsrichtung gefördert, wobei sich die Waschtrommel 20 um die eigene Längsmittelachse dreht.

Ein erster, konisch bzw. in Förderrichtung divergierend ausgebildeter Waschabschnitt (27) besteht aus einer ebenfalls konischen Siebwaschtrommel (28), die im Bereich des ersten Waschabschnitts (27) konzentrisch zum Trommelmantel 29 mit geringerem Durchmesser als dieser angeordnet ist. Die Siebwaschtrommel besteht vorzugsweise aus Siebringen 30 und diese wiederum aus einem ringförmig gebogenen Flachmaterial, wobei jedoch die Enden der zu einem Siebring 30 gebogenen Flachprofile nicht miteinander verbunden sind, sondern mit Abstand 31 voneinander und Überlappung enden. Diese "offenen" Siebringe 30 gewährleisten, daß durch die Drehung der Siebwaschtrommel 28 mit der Waschtrommel 20 etwa von den Siebringen 30 gefangene Krautteile bei Erreichen der Enden des Siebrings 30 von diesen abfallen. Die Siebringe 31 können alternativ auch als Halbrundprofile ausgebildet sein.

Im Bereich des ersten Waschabschnitts 27 wird eine erhebliche, nämlich ausreichende Wassermenge in die Vorrichtung, nämlich in die Waschtrommel 20, eingeleitet. Bei dem vorliegenden bevorzugten Ausführungsbeispiel führt eine Rücklaufleitung 32 vom Austrittsbereich der Vorrichtung zu der Eintrittsöffnung 26 der Waschtrommeln 20. In diesem Bereich sind (zwei) Düsenrohre 33 in achsparalleler Richtung innerhalb der Waschtrommel 20 bzw. der Siebwaschtrommel 28 angeordnet. An die Düsenrohre 33 schließen mehrere Sprühdüsen 34 an, die nach unten gerichtet sind und Wasser mit erhöhtem Druck auf die hier liegenden Rüben richten. Die Wassermenge ist so bemessen, daß sich innerhalb der Waschtrommel 20 ein im wesentlichen konstanter Wasserspiegel 35 einstellt. Die Sprühdüsen 34 bewirken eine Vorwäsche der Rüben. Dabei treten kleine Feststoffteile, insbesondere Sand und Schmutz, durch die Zwischenräume zwischen den Siebringen 30 hindurch in eine äußere Ringkammer 36.

An den ersten Waschabschnitt 27 schließt ein Hauptwaschabschnitt 37 an. In diesem Bereich ist die Waschtrommel 20 mit einem zylindrischen Trommelmantel 29 ausgebildet. An der Innenseite desselben sind verschiedene Wasch- bzw. Bewegungsorgane angeordnet, die eine kräftige Relativbewegung der Rüben zueinander bewirken. Bei dem vorliegenden Ausführungsbeispiel sind radial gerichtete Rundstäbe 38, in Längsrichtung verlaufende Mitnehmer 39 und ebenfalls radial gerichtete Flachprofile 40 in regelmäßiger Verteilung an der Innenseite des Trommelmantels 29 angeordnet. Die vorstehenden Organe bewirken eine effektive Wäsche der Rüben.

An die Waschtrommel 20 schließt eine gleichachsig gerichtete Haupttrommel 41 an, deren Durchmesser beträchtlich größer ist als der der Waschtrommel 20. Die Haupttrommel ist über eine radial gerichtete Endwand 42 mit der Außenseite der Waschtrommel 20 verbunden. Diese erstreckt sich mit einem Ende innerhalb der Haupttrommel 41.

In der Haupttrommel ist wiederum konzentrisch zu dieser eine Innentrommel 43 gelagert, die ebenfalls einen (etwas) größeren Durchmesser aufweist als der der Waschtrommel 20. Zwischen deren Ende und dem unmittelbar benachbarten Ende der Innentrommel 43 entsteht dadurch ein radialer Absatz, der teilweise durch eine radial gerichtete Überlaufwand 44 geschlossen ist.

Die Innentrommel 43 ist Teil des Steinefängers 21 bzw. führt zu diesem innerhalb der Haupttrommel 41. Der Steinefänger 21 arbeitet nach dem (bekannten) Auftriebsprinzip (US-PS-4 187 172). Dabei wird - etwa in der Längsmitte der Haupttrommel 41 - ein Fangring 45 gebildet. Dieser besteht aus ringförmigen Kanalabschnitten 46, die sich jeweils längs eines Teils des Umfangs der Haupttrommel 41 erstrecken, und zwar mit Überlappung. Eine Abwicklung des Steinefängers bzw. der Kanalabschnitte 46 ist in Fig. 8 gezeigt. Jeweils an das Ende eines sich über einen Teilumfang erstreckenden Kanalabschnitt 46 schließt eine nach innen, also in Radialrichtung weisende, Auftriebsöffnung 47 an. In diesem Bereich, in dem die Kanalabschnitte 46 einen etwas vergrößerten Querschnitt aufweisen, kommt in den Kanalabschnitten 46 strömendes Wasser in das Innere des Steinefängers 21. Diese Wasserströmung kommt durch einen in besonderer Weise erzeugten und durch die Drehung des Steinefängers wirksamen Wasserdruck zustande, und zwar jeweils für die sich im unteren Bereich befindliche Auftriebsöffnung 47.

In diesem unteren Bereich des Steinefängers befindet sich jeweils das Gemisch von Rüben, Steinen etc.. Diese haben das Bestreben, infolge ihres Eigengewichts in die Auftriebsöffnung 47 einzutreten. Die hier austretende, also entgegengesetzt gerichtete Wasserströmung verhindert den Eintritt der Rüben in die Auftriebsöffnung 47, während die ein höheres spezifisches Gewicht aufweisenden Steine gegen die Wasserströmung nach unten sinken in die Auftriebsöffnung 47. Eine gewisse Anzahl von Steinen wird in dieser gesammelt und durch ein im vorliegenden Falle trichterförmig ausgebildeten Tragblech 48 aufwärtsgefördert. Im oberen Bereich gleiten die Steine von diesem Tragblech 48 herunter in das Innere des Steinefängers, und zwar über einen Fangtrichter 49 auf ein Förderband 50. Letzteres erstreckt sich innerhalb der Haupttrommel in axialer Richtung.

Der Steinefänger bzw. die Kanalabschnitte 46 sind hier in besonderer Weise ausgebildet. Zur Aufnahme des erforderlichen Wassers für die Erzeugung der aufwärts- bzw. nach innengerichteten Strömung ist jedem Kanalabschnitt 46 an dem von der Auftriebsöffnung 47 abliegenden Ende eine Wasseraufnahmetasche 51 zugeordnet. Diese erstrecken sich bei dem vorliegenden Ausführungsbeispiel im Bereich einer ringförmigen Kammer (Sammelkammer 52) innerhalb der Haupttrommel 41. Die Wasseraufnahmetaschen 51 sind auf der radial innenliegenden Seite (teilweise) offen, so daß während der Bewegungsphase im unteren Bereich Wasser in der Sammelkammer 52 durch die Wasseraufnahmetaschen 51 aufgenommen wird, und zwar in Abhängigkeit von der Größe, also dem Fassungsvermögen derselben. Das Wasser wird bei der weiteren Drehbewegung infolge entsprechend trichterförmig ausgebildeter Bodenwand 53 der Wasseraufnahmetasche 51 in das Aufnahmeende des jeweils zugeordneten Kanalabschnitts 46 eingefördert. Dieser führt bei schrägliegender Anordnung zu der versetzt zur Wasseraufnahmetasche 51 angeordneten Auftriebsöffnung 47.

Wie insbesondere aus Fig. 8 ersichtlich, haben die Wasseraufnahmetaschen 51 durch die divergierende Bodenwand 53 und durch die Abmessung in Axialrichtung der Haupttrommel 41 - nämlich bis zu deren radial gerichteter Endwandung 54 - ein verhältnismäßig großes Volumen. Dies hat wiederum zur Folge, daß im Bereich der zugeordneten Auftriebsöffnung 47 - wenn sich diese im unteren Drehbereich befindet - ein Auftrieb (aufwärts gerichtete Wasserströmung) von ausreichender Dauer, also während eines ausreichenden Drehweges, erzeugt wird. Diese Maßnahme ist deshalb erforderlich, weil in der Außentrommel (Haupttrommel 41) ein für Steinefänger dieses Typs verhältnismäßig niedriger Wasserstand aufrechterhalten wird. Dieser reduzierten Wassermenge in der Außentrommel muß ausreichend Wasser entnommen werden, um die den Rüben entgegengerichtete Strömung zu erzeugen.

Die Innentrommel 43 hat im vorliegenden Falle einen kleineren Durchmesser als der unmittelbar an die Haupttrommel 41 anschließende Fangring 45. Zwischen beiden ist deshalb eine Konustrommel 55 als Übergang angebracht. Diese hat Trichterwirkung in Richtung auf den Steinefänger. Auf der gegenüberliegenden Seite des Fangrings 45 ist ein ringsherumlaufender Absatz 56 gebildet. Dieser wird durch die Rüben überwunden - unter Mitwirkung der Wasserströmung -, während die Steine an diesem Absatz 56 festgehalten werden.

Es folgt dann eine kurze Zwischentrommel 57, an die der in besonderer Weise ausgebildete Krautfänger 22 als Trommelkrautfänger anschließt. Dieser besteht bei dem hier erörterten Ausführungsbeispil aus (zwei) Trommelabschnitten 58 und 59. Jeder ist als Siebtrommel ausgebildet, also mit einem Öffnungen aufweisenden Trommelmantel. An der Innenseite desselben sind Krautfangorgane in geeigneter Ausführung angebracht. Diese fangen das Kraut im unteren Bereich infolge der Drehung aus dem Gemisch heraus, fördern es in Umgangsrichtung aufwärts. Im oberen Bereich der Trommelabschnitte 58, 59 wird das Kraut von den Krautfangorganen entfernt. Es fällt infolge Eigengewichts nach unten in das Innere des Trommelabschnitts 58, 59 und hier in einen Krautfangtrichter 60. Unterhalb desselben befindet sich ein Förderband, bei dem vorliegenden Ausführungsbeispiel das Förderband 50, welches auch für den Abtransport der Steine dient.

Die in der beschriebenen Weise von Steinen und Kraut befreiten Rüben treten nach Verlassen des Krautfängers 22 in die Nachwaschvorrichtung 23 ein. Diese besteht im vorliegenden Falle aus einer siebartigen bzw. gelochten Nachwaschtrommel 61 mit konischer, in Förderrichtung divergierender Gestalt. Die Nachwaschtrommel 61 ist mit dem Ende des Krautfängers 22 verbunden, bildet demnach einen integrierten Teil der Gesamtvorrichtung.

Im unteren Bereich der Nachwaschtrommel 61 befindet sich ein trichterförmiger Wassersammler 62. Hier wird der größte Teil des Wassers aufgefangen und über die bereits erwähnte Rücklaufleitung 32 der Eingangsseite der Vorrichtung zugeführt. Die infolge Eigengewichts aus der Nachwaschtrommel 61 austretenden, gewaschenen Rüben gelangen auf ein Rübenförderband 63 zur weiteren Verarbeitung.

Im Bereich der Nachwaschvorrichtung 23 werden die Rüben nochmals mit Wasser besprüht. Zu diesem Zweck wird gereinigtes, nämlich von einem Klärbecken kommendes Wasser über eine Zuführungsleitung 64 über das Austrittsende in die Nachwaschtrommel 61 eingeführt. Ein achsparallel angeordnetes Düsenrohr 65 mit nach unten gerichteten Sprühdüsen 66 richtet Wasserstrahlen mit hohem Druck auf die sich in der Nachwaschtrommel 61 befindenden Rüben. Das durch den Wassersammler 62 aufgefangene und zurückgeförderte Wasser ist demnach durch verhältnismäßig sauberes, nämlich nur für die Vorwäsche benutztes Wasser aufbereitet.

Der Wasserkreislauf ist bei dieser Vorrichtung besonders wichtig. Im Bereich des Steinefängers 21, nämlich der wasserdurchlässigen Trommelabschnitte 58, 59, tritt Wasser (mit Sand etc.) nach außen in die Sammelkammer 52. Dadurch wird einerseits der Krautfangeffekt vergrößert. Zum anderen wird mit Feststoffpartikeln enthaltenes Wasser abgeführt, so daß in diesem Bereich der Wasserspiegel 35 stark absinkt. In der Sammelkammer 52 ist in einem radial innenliegenden Bereich ein Überlauf gebildet, der aus einzelnen spaltförmigen Überlauföffnungen 67 in einer Radialwand 68 der Haupttrommel 41 besteht. In diesem Bereich wird demnach ein Teil des Wassers (mit Feststoffpartikeln) im unteren Bereich in Axialrichtung abgeleitet in eine Ablaufleitung 69, die zum Klärbecken führt.

Ein großer Teil des in der Sammelkammer 52 aufgefangenen Wassers gelangt in eine an die Sammelkammer 52 in Gegenförderrichtung anschließende Rückförderkammer 70, die im Bereich zwischen der Innentrommel 43 und der Haupttrommel 41 gebildet ist. Der Steinefänger 21, der sich im Bereich zwischen Sammelkammer 52 und Rückförderkammer 70 erstreckt, bildet einen ringförmigen Verbindungspalt 71 zwischen Sammelkammer 52 und Rückförderkammer 70. Dieser Verbindungsspalt 71 entsteht in Teilbereichen des Umfangs durch die besondere Gestaltung des bereits beschriebenen Steinefängers.

Das Wasser in der Rückförderkammer 70 wird über einen ringförmigen Überlauf 72 in die Innentrommel 43 zurückgefördert und damit in den Förderstrom aus Wasser, Rüben, Steinen etc.. Dadurch wird im Bereich der Innentrommel 43 und des anschließenden Steinefängers 21 sowie des Krautfängers 22 stets eine ausreichende Wassermenge zur Verfügung gestellt, ohne daß es einer entsprechenden Menge von außen zugeführten Wassers bedarf.

Der ringförmige Überlauf 72 wird zwischen der radial gerichteten Überlaufwand 44 und dem benachbarten Ende der Waschtrommel 20 gebildet. Das Wasser wird diesem Überlauf 72 durch ein Förderorgan, nämlich durch eine Förderschnecke 73 zugefördert, die im Bereich zwischen der Innentrommel 43 und der Haupttrommel 41 angeordnet ist.

Die insoweit beschriebene komplexe Vorrichtung ruht an zwei Stellen drehbar auf einem Traggestell 74, 75. Ein angeflanschter Motor 76 bewirkt den Drehantrieb der gesamten Vorrichtung einschließlich Waschtrommel 20, Haupttrommel 41 mit Innentrommel 43 und Nachwaschvorrichtung 23. Die Vorrichtung ist im Bereich der Traggestelle 74, 75 durch geeignete Drehlager, z. B. Kugeldrehverbindungen, abgestützt.

Das für Steine und Kraut gemeinsame Förderband 50 ist feststehend angebracht. Der Fangtrichter 49 für Steine und der Krautfangtrichter 60 für Kraut sind so angeordnet, daß sie jeweils eine zugeordnete Längshälfte des Förderbandes 50 beschicken. An den freien Seiten sind oberhalb des Förderbandes feststehende Seitenwände 77 und 78 angeordnet. Diese bewirken eine verlustfreie Abförderung von Steinen und Kraut.

Der trommelförmig ausgebildete Krautfänger 22 ist in besonderer Weise ausgebildet. Bei dem Ausführungsbeispiel der Fig. 9 bis 11 besteht das trommelförmige Gebilde bzw. jeder Trommelabschnitt 58, 59 aus polygonartig ausgebildeten, ringsherumlaufenden Mantelringen 79. Diese sind im vorliegenden Fall aus T-Profilen mit in das Innere der Trommel weisenden Flanschen. Zwischen den Mantelringen 79 sind in Umfangsrichtung verlaufende Schlitze 80 gebildet. Im Bereich derselben sind bewegbare Krautfangorgane 81 gelagert. Diese bestehen bei dem gezeigten Ausführungsbeispiel aus einer sägezahnartig ausgebildeten Fangschiene 82, die sich in Umfangsrichtung bzw. etwa tangential erstreckt und in Ausgangsstellung (Fig. 10 links) geringfügig über die durch die Mantelringe 79 gebildete innere Mantelfläche hinweg nach innen vorstehen. Dadurch können Fangzähne 83 der Krautfangorgane 81 faserige Bestandteile des Feststoff-Wasser-Gemisches aufnehmen und in Drehrichtung nach oben fördern.

Die Mantelringe 79 bestehen aus einzelnen geradlinigen Abschnitten von T-Profilen, die an ihren Enden durch achsparallel angeordnete Verbindungsstücke, im vorliegenden Fall Vierkantprofile 84, miteinander verbunden sind. An dem so ausgebildeten Mantel des Krautfängers 22 sind die Krautfangorgane 81 so gelagert, daß die Fangschienen 82 im oberen Bereich der Trommel infolge Eigengewichts nach innen fallen (Fig. 10 oben), wodurch sich das Kraut etc. von den Fangzähnen 83 löst und über den Krautfangtrichter 60 auf das Förderband 50 gelangt. Während eines vorhergehenden Bewegungsabschnitts sind die Krautfangorgane 81 bzw. deren Fangschienen 82 auf einem Stützorgan in Gestalt einer Stützschiene 85 geführt. Erst nach Verlassen derselben können die Krautfangorgane 81 die beschriebene Abwerfbewegung ausführen. Die Stützschiene 85 ist ortsfest innerhalb der Trommelabschnitte 58, 59 angeordnet. Die Krautfangorgane 81 liegen mit Stützeisen 86 auf einem außenliegenden Flansch der Stützschiene auf. Im unteren Teil der Bewegung, wenn die Krautfangorgane 81 durch Eigengewicht nach außen belastet sind, ist eine Abstützung derselben auf den Vierkantprofilen 84 gegeben. Die Länge der Krautfangorgan bzw. der Fangschienen 82 entspricht demnach dem Abstand der Vierkantprofile 84 in Umfangsrichtung. An den Enden der Fangschienen 82 sind zu diesem Zweck an den Vierkantprofilen 84 anliegende Stütznasen 87 angebracht.

Die Krautfangorgane 81 sind in Längsreihen, also gruppenweise im vorstehenden Sinne bewegbar. Zu diesem Zweck sind jeweils in Reihen nebeneinanderliegende Krautfangorgane 81 durch eetwa achsparallel angeordnete Querträger 88 miteinander verbunden. Diese sind im vorliegenden Fall ebenfalls als Vierkantrohre ausgebildet. An diesen ist an einem Ende ein Tragarm 89 angebracht, der über ein Schwenklager 90 mit einem feststehenden Haltearm 91 verbunden ist. Die seitlich an den Enden der Trommel bzw der Trommel abschnitte 58, 59 angebrachten Haltearme 91 sind im vorliegenden Fall mit angrenzenden Tragteilen verbunden, nämlich einerseits mit der Zwischentrommel 57 und andererseits mit einem Zwischenring 92, der bei dem vorliegenden Ausführungsbeispiel zwischen den benachbarten Trommelabschnitte 58, 59 angeordnet und als T-Profil ausgebildet ist.

Eine im Aufbau einfachere Ausführung eines trommelförmigen Krautfängers 22 ist in Fig. 12 bis 14 dargestellt. An einem loch- bzw. gitterförmigen Trommelmantel 93 sind innenseitig feststehende Krautfangorgane in Gestalt von Mitnehmerstegen 94 angeordnet. Diese sind als Flachmaterial ausgebildet und von im wesentlichen dreieckförmiger Gestalt. Sie erstrecken sich in Querebenen, ggf. versetzt zueinander bzw. "Auf Lücke". Des weiteren können die Mitnehmerstege 94 unterschiedliche radiale Abmessung (Höhe) haben, wie in Fig. 14 dargestellt. Die Mitnehmerstege haben auf der in Bewegungsrichtung vornliegenden Seite eine im wesentlichen radial gerichtete Mitnehmerkante 95. Diese soll die faserigen Bestandteile des Gemisches aufnehmen. Zu diesem Zweck ist die Mitnehmerkante 95 mit Erhöhungen und Vertiefungen, insbesondere wellen-oder sägezahnförmig ausgebildet.

Im oberen Bereich des sich drehenden Trommelmantels 93 werden die faserigen Bestandteile (Kraut etc.) von den Mitnehmerstegen 94 entfernt und über den Krautfangtrichter 60 auf das Förderband 50 gegeben. Diese"Entladung" kann durch Eigengewicht der faserigen Bestandteile erfolgen, zusätzlich aber durch Abstreiforgane unterstützt werden. Bei dem gezeigten Ausführungsbeispiel (Fig. 12 und 14) sind in diesem oberen Bereich ortsfeste, aber relativ bewegbare Abstreifscheiben 96 jeweils im Bereich zwischen den benachbarten Mitnehmerstegen 94 angeordnet. Die mit Profil ausgebildeten, beispielsweise am Umfang sägezahnförmigen Abstreifscheiben 96 können angetrieben werden, und zwar in Richtung des Pfeiles 97, so daß sie bei entsprechend höherer Geschwindigkeit als die Mitnehmerstege 94 das Kraut von diesen abheben und nach unten abwerfen. Die Abstreifscheiben 96 sind zu diesem Zweck auf einer gemeinsamen Antriebswelle 98 gelagert und werden durch einen Motor 99 drehend angetrieben.

In Förderrichtung auf die vorstehend beschriebene Abstreifeinrichtung folgend ist bei dem hier gezeigten Ausführungsbeispiel ein Abstreifer 100 angeordnet, der aus Federblech besteht und elastisch an der Innenseite des Trommelmantels 93 anliegt. Durch diesen Abstreifer wird der Trommelmantel 93 gereinigt und insbesondere ein Zusetzen der Öffnungen im Trommelmantel 93 verhindert.

In Fig. 15 ist ein Teil einer Vorrichtung entsprechend Fig. 1 bis 3 gezeigt, bei der die Waschtrommel 20 konstruktiv in abweichender Ausführung ausgebildet ist. Eingangsseitig ist der an die Eintrittsöffnung 26 anschließende Waschabschnitt 27 ebenfalls mit einer innenliegenden Siebwaschtrommel 28 ausgebildet. Diese besteht jedoch aus in wesentlichen in Längsrichtung verlaufenden Trommelstäben 101. Die durch Stützbleche 102 abgestützten Trommelstäbe 101 sind in Umfangsrichtung mit Abstand voneinander angeordnet, so daß spaltförmige Zwischenräume gebildet sind. Die Trommelstäbe 101 sind hier leicht divergierend in Förderrichtung angeordnet.

In besonderer Weise ist auch der Übergang der Waschtrommel 20 zur Haupttrommel 41 bzw. zur Innentrommel 43 ausgebildet. Die Waschtrommel 20 hat hier im Bereich des Hauptwaschabschnitts 37 einen Durchmesser, der etwa dem Durchmesser der Innentrommel 43 entspricht. Um gleichwohl im Bereich des Übergangs die radial gerichtete Überlaufwand 44 zu schaffen, ist der zugekehrte Endbereich der Waschtrommel 20 als konischer, in Förderrichtung konvergierender Trommelabschnitt 103 ausgebildet. In diesem Bereich sind innenseitig Förderorgane, nämlich eine Förderschnecke 104, angeordnet, durch die der Transport des Wasser-Feststoff-Gemisches von der Waschtrommel 20 in die Innentrommel 43 gewährleistet ist.

Die Haupttrommel 41, die Innentrommel 43 sowie Steinefänger 21 und Krautfänger 22 sind im übrigen bei diesem Ausführungsbeispiel in gleicher Weise ausgebildet wie bei dem bereits beschriebenen Ausführungsbeispiel der Fig. 1 bis 3.

Eine weitere grundsätzlich umgestaltete Alternativelösung ist in Fig. 16 gezeigt. Diese Vorrichtung ist auf die Zuführung eines Schwemmstroms eingerichtet, also eines Wasser-Feststoff-Gemisches in einem Schwemmstromkanal 105. An diesem schließt die Vorrichtung gemäß Fig. 16 unmittelbar an. Der Schwemmstromkanal 105 mündet in diese Vorrichtung.

Abweichend von den bisher beschriebenen Ausführungsbeispielen ist hier eingangsseitig unmittelbar der Steinefänger 21 angeordnet. Es fehlt auch in diesem Bereich die äußere Haupttrommel. Stattdessen liegen der Fangring 45, die Kanalabschnitte 46 und die Wasseraufnahmetaschen 51 im oberen Bereich der Vorrichtung frei. Im unteren Bereich ist eine Halbtrommel 106 gebildet, die den Steinefänger 21 und den unmittelbar folgenden Krautfänger 22 schalenförmig umschließt. In der Halbtrommel 106 wird das aus dem Steinefänger 21 sowie aus dem Krautfänger 22 austretende Wasser gesammelt. Im übrigen ist der Steinefänger 21 in der beschriebenen, an sich bekannten Weise ausgebildet, jedoch mit besonders großen Wasseraufnahmetaschen 51, die, wie ebenfalls beschrieben, durch Aufnahme einer größeren Wassermenge eine Auftriebsströmung im Bereich der Auftriebsöffnungen 47 während einer ausreichenden Dauer erzeugen.

Die von dem Steinefänger 21 ausgesonderten Steine werden über eine feststehende Schurre 107 seitlich aus dem Bereich des Steinefängers 21 herausgefördert und abgeführt.

Der an den Steinefänger 21 anschließende Krautfänger 22 ist zweckmäßigerweise so ausgebildet wie der im Zusammenhang mit Fig. 1 ff. beschriebene Krautfänger. Dessen Trommelmantel bzw. dessen Trommelabschnitte 58 und 59 werden in einem Teilbereich außen von den sich in Längsrichtung erstreckenden Wasseraufnahmetaschen 51 umgeben.

Die Halbtrommel 106 bildet auf der von dem Steinefänger 21 abliegenden Seite einen ringspaltförmigen Überlauf 108. Über diesen wird ein Teil des Wassers abgeleitet und in einer Rückführungsleitung 109 zum Klärbecken gefördert. Es handelt sich dabei um Wasser mit einem erheblichen Schmutzanteil.

Das im Bereich des Krautfängers 22 gesammelte Kraut wird in der bereits beschriebenen Weise nach innen abgeworfen, im vorliegenden Fall in eine Förderrinne 110. Diese ist im Querschnitt V-förmig ausgebildet und erstreckt sich feststehend über die annähernd volle Länge der Vorrichtung. Im Bereich der Eintrittsöffnung (Steinefänger 21) wird über eine Wasserleitung 111 Wasser als Fördermittel in die Förderrinne 110 eingeführt. Es wird demnach ein Gemisch von Wasser und Kraut über die volle Länge der Förderrinne 110 bis zum Ausgang 112 derselben geleitet.

An die Trommel bzw. Trommelabschnitte 58, 59 des Krautfängers 22 schließt unter fester Verbindung mit diesem die Waschtrommel 20 an. Diese ist hier ohne ersten Waschabschnitt 27 ausgebildet, sondern mit einem Hauptwaschabschnitt 37. Es folgt dann ein konischer Trommelabschnitt 103, der in bereits beschriebener Weise mit einer Förderschnecke 104 ausgebildet ist. An das Ende des Trommelabschnitts 103 schließt unmittelbar eine Nachwaschvorrichtung 23 an unter fester Verbindung mit der Waschtrommel 20. Diese besteht in bereits beschriebener Weise aus einer gelochten bzw. gitterartigen Nachwaschtrommel 61 und mit Einrichtungen zur Ableitung von Wasser.

Die Wasserführung ist bei dem vorliegenden Ausführungsbeispiel abweichend von dem gemäß Fig. 1 ff.. Vom Klärbecken kommendes Wasser wird in der beschriebenen Weise über ein Düsenrohr 65 mit Sprühdüsen 66 im Bereich der Nachwaschtrommel 61 auf die bereits von Kraut und Steinen befreiten Rüben gegeben. Dieses lediglich durch die Nachwäsche belastete Wasser wird durch den Wassersammler 62 aufgefangen und über eine Umlaufleitung 113 mit anschließendem Düsenrohr 114 bis in den Bereich der Waschtrommel 20 geleitet. Das achsparallel angeordnete Düsenrohr 114 ist, wie das Düsenrohr 65 ausgebildet, nämlich mit Sprühdüsen 66. Hierdurch wird lediglich für die Nachwäsche eingesetztes Wasser unmittelbar der Hauptwäsche zugeführt, also dem Hauptwaschabschnitt 37 der Waschtrommel 20.

Im Bereich der Nachwaschvorrichtung, nämlich unterhalb der Nachwaschtrommel 61, unmittelbar im Anschluß an die Waschtrommel 20, ist ein weiterer, trichterförmiger Wassersammler 115 angeordnet. Dieser nimmt einen Teil des mit den Rüben aus der Waschtrommel 20 austretenden Wassers unmittelbar auf. Es handelt sich dabei um stark verschmutztes Wasser, welches über eine Verbindungsleitung 116 der zum Klärbecken führenden Rückführungsleitung 109 zugeführt wird. Die Sprühdüsen 66 des Düsenrohrs 65 werden in Förderrichtung nach dem Wirkungsbereich dieses Wassersammlers 115 wirksam.

Auch bei diesem Ausführungsbeispiel sind die einzelnen Organe zu einem gemeinsamen, im wesentlichen trommelförmigen Gebilde zusammengefügt, welches als Einheit drehend angetrieben wird. Die Einzelorgane, nämlich Waschtrommel, Krautfänger und Steinefänger, können auch unabhängig voneinander und unabhängig von der Gesamtvorrichtung eingesetzt werden. Besonders vorteilhaft ist ein (einzeln verwendbarer) Steinefänger, der im Sinne der beschriebenen Ausführung aus zwei umlaufenden Trommeln besteht, nämlich einer Innentrommel und einer Außentrommel. Zwischen beiden Trommeln unterschiedlichen Durchmessers sind die erforderlichen Wasserauftriebs- und Steinefangorgane angeordnet, nämlich wenigstens ein Fangring zur Aufnahme der Steine, Kanalabschnitte mit Auftriebsöffnungen und Wasseraufnahmetaschen. Der Wasserstand kann dabei in der Außentrommel verhältnismäßig niedrig sein. Um trotzdem ausreichend Wasser zur Erzeugung des erforderlichen Auftriebs (Auftriebsströmung) zur Verfügung zu haben, sind die den Kanalabschnitten zugeordneten Wasseraufnahmetaschen entsprechend groß dimensioniert. Ein wesentlicher Vorteil dieser Ausbildung des Steinefängers besteht darin, daß der Wasserbedarf geringer ist gegenüber herkömmlichen Steinefängern dieser Art, etwa im Sinne der US-PS-41 87 172. Darüber hinaus bestehen infolge der bei den umlaufenden Trommeln keine Dichtungsprobleme, wie sie bei einem Steinefänger der bekannten Ausführung gegeben sind.

**Patentansprüche**

1. Vorrichtung zum Trennen eines Gemisches aus (Zucker-) Rüben einerseits und Steinen sowie Kraut andererseits unter Verwendung von Wasser als Reinigungs- und Fördermittel für das Gemisch, mit einer zusammenhängenden, sich insgesamt drehenden Haupttrommel (41) zum Aussondern der Steine und des Krauts aus dem Gemisch, dadurch gekennzeichnet, daß in der Haupttrommel (41; 106) ein Steinefänger (21) und ein dahinterliegender Krautfänger (22) angeordnet sind, wobei der Steinefänger (21) und der Krautfänger (22) getrennt voneinander ausgebildet sind, und wobei der Steinefänger (21) aus einem an der Innenseite der Haupttrommel (41; 106) umlaufenden Fangring (45) zur Aufnahme von Steinen und mehreren dem Fangring (45) zugeordneten Kanalabschnitten (46) besteht, an deren einem Ende jeweils radial nach innen gerichtete Auftriebsöffnungen (47) und an deren anderem Ende jeweils Wasseraufnahmetaschen (51) angeordnet sind, durch die den Kanalabschnitten (46) und damit Auftriebsöffnungen (47) Auftriebswasser zuführbar ist.

2. Vorrichtung nach Anspruch 1, dadurch gekennzeichnet, daß die Wasseraufnahmetaschen (51) sich im wesentlichen in Längsrichtung der Haupttrommel (41; 106) an der Innenseite desselben im Bereich des anschließenden Krautfängers (22) erstrecken.

3. Vorrichtung nach Anspruch 1 oder 2, dadurch gekennzeichnet, daß dem Steinefänger (21) und dem unmittelbar darauffolgenden Krautfänger (22) ein Waschaggregat vor- oder nachgeordnet ist, welches als Trommel (Waschtrommel 20) ausgebildet und mit Steinefänger (21) oder Krautfänger (22) verbunden ist, insbesondere mit der Steinefänger (21) und Krautfänger (22) aufnehmenden Haupttrommel (41).

4. Vorrichtung nach Anspruch 3, dadurch gekennzeichnet, daß die gleichachsig zur Haupttrommel (41) bzw. zum Steinefänger (21) oder Krautfänger (22) angeordnete Waschtrommel (20) einen geringeren (Außen-) Durchmesser aufweist als die Haupttrommel (41) und daß das der Haupttrommel (41) zugekehrte Ende der Waschtrommel (20) in diese unter Bildung eines ringsherum laufenden Absatzes (Überlaufwand) ragt.

5. Vorrichtung nach Anspruch 3 oder 4, dadurch gekennzeichnet, daß das Waschaggregat (Waschtrommel 20) aus mehreren, insbesondere zwei Waschabschnitten (27, 37) besteht, in denen das Gemisch bzw. die Rüben einer Reinigungsbehandlung durch Wasser und mechanische Reinigungswerkzeuge unterzogen wird.

6. Vorrichtung nach Anspruch 5, dadurch gekennzeichnet, daß eintrittsseitig in der Waschtrommel (20) eine zu dieser konzentrische Siebwaschtrommel (28) mit geringerem Durchmesser als die Waschtrommel (20) zur Aufnahme des Gemisches angeordnet ist.

7. Vorrichtung nach Anspruch 6, dadurch gekennzeichnet, daß die Siebwaschtrommel (28) mit einem in Förderrichtung divergierenden (trichterförmigen) Querschnitt ausgebildet ist.

8. Vorrichtung nach Anspruch 6 oder 7, dadurch gekennzeichnet, daß die Siebwaschtrommel (28) aus einzelnen mit Abstand voneinander angeordneten Siebringen (30) besteht.

9. Vorrichtung nach Anspruch 8, dadurch gekennzeichnet, daß die Siebringe (30) der Siebwaschtrommel (28) aus endlichen Rundprofilstücken (Halbrundprofile) besteht, deren Enden mit (radialem) Abstand voneinander angeordnet sind.

10. Vorrichtung nach einem der Ansprüche 5 bis 9, dadurch gekennzeichnet, daß im Bereich des ersten Waschabschnitts (27) in der Waschtrommel (20), insbesondere im Bereich der Siebwaschtrommel (28) dem eingeförderten Gemisch Wasser unter Druck zuführbar ist (vorwaschen), insbesondere durch wenigstens ein Düsenrohr (33), an das nach unten gerichtete, im wesentlichen radial Sprühdüsen (34) angeschlossen sind.

11. Vorrichtung nach einem der Ansprüche 5 bis 10, dadurch gekennzeichnet, daß die Waschtrommel (20) im Bereich des ersten Waschabschnitts (27) (Siebwaschtrommel (28) konisch ausgebildet ist - in Förderrichtung divergierend.

12. Vorrichtung nach einem der Ansprüche 3 bis 11, dadurch gekennzeichnet, daß innerhalb der an die Waschtrommel (20) anschließenden Haupttrommel (41) eine mit dieser verbundene Innentrommel (43) angeordnet ist, in deren Bereich der Steinefänger (21) gebildet ist.

13. Vorrichtung nach Anspruch 12, dadurch gekennzeichnet, daß zwischen der Haupttrommel (41) und der Innentrommel (43) eine ringförmige Wasserkammer gebildet ist, insbesondere eine Rückförderkammer (70).

14. Vorrichtung nach Anspruch 12 oder 13, dadurch gekennzeichnet, daß die Innentrommel (43) einen größeren Durchmesser aufweist als die Waschtrommel (20), wobei eine radialgerichtete Wand (Überlaufwand 44) auf der der Waschtrommel zugekehrten Seite einen (spalt- bzw. lochförmigen) Überlauf (42) in die Innentrommel (43) bildet.

15. Vorrichtung nach Anspruch 13 oder 14, dadurch gekennzeichnet, daß die Rückförderkammer (70) Fördermittel für das Wasser in Richtung entgegen zur Transportrichtung der Rüben etc. angeordnet sind, insbesondere eine fest angeordnete Förderschnecke (73).

16. Vorrichtung nach einem oder mehreren der Ansprüche 1 bis 15, dadurch gekennzeichnet, daß der Krautfänger als (zylindrische) Trommel ausgebildet ist mit Krautfangorganen (81; 94) an der Innenseite der wasserdurchlässigen, insbesondere siebförmigen Trommel (Trommelabschnitte 58; 59).

17. Vorrichtung nach Anspruch 16, dadurch gekennzeichnet, daß der als Trommel ausgebildete Krautfänger (22) unmittelbar im Anschluß an den Steinefänger (21) in Fortsetzung desselben gebildet ist, insbesondere konzentrisch innerhalb der Haupttrommel (41).

18. Vorrichtung nach Anspruch 16 oder 17, dadurch gekennzeichnet, daß die an der Innenseite des trommelförmigen Krautfängers (22) angeordneten Krautfangorgane als nach innen vorspringende Mitnehmer ausgebildet sind, vorzugsweise als etwa dreieckförmige, aus Flachmaterial bestehende Mitnehmerstege (94), die auf einer in Umlaufrichtung vorn liegenden Mitnehmerkante (95) mit Vorsprüngen und Vertiefungen (sägezahn- bzw. wellenförmig) zum Erfassen von Kraut ausgebildet sind.

19. Vorrichtung nach Anspruch 18, dadurch gekennzeichnet, daß das durch die Krautfangorgane (Mitnehmerstege) (34) mitgeführte Kraut durch ortsfeste Abstreiforgane, insbesondere durch umlaufende Abstreifscheiben (96) von den Krautfangorganen entfernbar ist, vorzugsweise im oberen Bereich des Krautfängers (22).

20. Vorrichtung nach einem der Ansprüche 16 bis 19, dadurch gekennzeichnet, daß die Krautfangorgane (81) beweglich, insbesondere schwenkbar, an der Innenseite des trommelförmigen Krautfängers (22) gelagert sind, der Art, daß die Krautfangorgane (81) bzw. Teile derselben (Fangschiene) (82) zum Abwerfen von Kraut relativ zur Trommel (Trommelabschnitte (58; 59) bewegbar sind, insbesondere infolge ihres Eigengewichts im oberen Bereich des Krautfängers (22).

21. Vorrichtung nach einem der Ansprüche 16 bis 20, dadurch gekennzeichnet, daß die Trommel (Trommelabschnitte 58; 59) des Krautfängers (22) mit Öffnungen versehen sind, insbesondere rostartig ausgebildet ist.

22. Vorrichtung nach einem der Ansprüche 16 bis 21, dadurch gekennzeichnet, daß das von den Krautfangorganen (81, 94) entfernte Kraut im oberen Bereich der Trommel (Trommelabschnitte 58, 59) über einen Krautfangtrichter (60) auf ein in Längsrichtung sich erstreckendes Förderband (50) abwerfbar ist.

23. Vorrichtung nach einem oder mehreren der Ansprüche 1 bis 22, dadurch gekennzeichnet, daß die Wasseraufnahmetaschen (51) mit einem vergrößerten Volumen ausgebildet sind, ·insbesondere durch Erstreckung bis zu einer radialen Endwandung (54) der Haupttrommel und mit einem sich zum Kanalabschnitt (46) hin verbreiternden Querschnitt.

24. Vorrichtung nach Anspruch 23, dadurch gekennzeichnet, daß sich die Wasseraufnahmetaschen im Bereich einer den Krautfänger (22) (Trommelabschnitte 58; 59) gebildeten, ringförmigen Sammelkammer (52) zur Aufnahme von aus dem Krautfänger (22) austretendem Wasser angeordnet sind.

25. Vorrichtung nach Anspruch 24, dadurch gekennzeichnet, daß die Sammelkammer (52) mit der Rückförderkammer (70) verbunden ist, insbesondere durch einen Verbindungsspalt (71) im Bereich zwischen dem Fangring (45) des Steinefängers (21) und der Innentrommel (43).

26. Vorrichtung nach einem der Ansprüche 23 bis 25, dadurch gekennzeichnet, daß ein Teil des aus dem Krautfänger (22) austretenden und durch die Sammelkammer (52) aufgenommenen Wassers über eine Ablaufleitung (69) einem Klärbecken oder dergleichen zuführbar ist.

27. Vorrichtung nach Anspruch 26, dadurch gekennzeichnet, daß im Bereich einer Radialwand (68) am Ende der Haupttrommel (41) zur Begrenzung der Sammelkammer (52) innenseitig (dem Trommelabschnitt 59 zugekehrt) ein Überlauf gebildet ist (Überlaufbohrungen 67), insbesondere zur Zuführung von Wasser zur Ablaufleitung (69).

28. Vorrichtung nach einem oder mehreren der Ansprüche 1 bis 27, dadurch gekennzeichnet, daß der Endteil als Nachwaschvorrichtung (23) für die Rüben ausgebildet ist mit einer (wasserdurchlässigen) Nachwaschtrommel (61), die vorzugsweise in Förderrichtung divergierend ausgebildet ist.

29. Vorrichtung nach einem oder mehreren der Ansprüche 12 bis 28, dadurch gekennzeichnet, daß die Waschtrommel (20) im wesentlichen mit gleichem Durchmesser ausgebildet ist wie die Innentrommel (43), wobei zwischen dieser und der Waschtrommel (20) ein konischer, in Förderrichtung konvergierender Trommelabschnitt (103) mit Fördereinrichtung (Förderschnecke 104) angeordnet ist.

30. Vorrichtung nach einem oder mehreren der Ansprüche 1 bis 29, dadurch gekennzeichnet, daß in Förderrichtung des Gemisches zunächst ein Steinefänger (21), nachfolgend ein Krautfänger (22) und sodann eine Waschtrommel (20) aufeinanderfolgend angeordnet und miteinander verbunden sind.

31. Vorrichtung nach Anspruch 30, dadurch gekennzeichnet, daß an die Waschtrommel (20) eine Nachwaschvorrichtung (Nachwaschtrommel 61) mit Wassersammler (62) anschließt, wobei das aufgefangene Wasser über eine Umlaufleitung (113) und ein Düsenrohr (114) bis in den Bereich der Waschtrommel (20) förderbar ist.

32. Vorrichtung nach Anspruch 30 oder 31, dadurch gekennzeichnet, daß die Haupttrommel (41) durch eine bodenfeste Halbtrommel (106) gebildet ist und daß im Bereich zwischen Krautfänger (22) und Waschtrommel (20) in der äußeren Halbtrommel (106) ein Überlauf (108) vorhanden ist, zur Abführung eines Teils des aus dem Krautfänger (22) austretenden Wassers zum Klärbecken.

33. Vorrichtung nach einem oder mehreren der Ansprüche 1 bis 32, daß der wenigstens einen Fangring (45) zur Aufnahme von Steinen und mehrere diesem zugeordnete Kanalabschnitte (46) mit Wasseraufnahmetaschen (51) aufweisende Steinefänger (21) wenigstens zwei konzentrisch zueinander angeordnete Trommeln (Haupttrommel 41, Innentrommel 43) aufweist, zwischen denen der Fangring (45), die Kanalabschnitte (46) und deren Wasseraufnahmetaschen (41) angeordnet sind.

## Claims

1. Apparatus for separating a mixture of (sugar) beets on the one hand and stones and tops on the other hand using water as the cleaning and conveying agent for the mixture, with a coherent main drum (41) rotating as a whole for sorting out the stones and tops from the mixture, characterised in that located in the main drum (41; 106) is a stonecatcher (21) and a tops-catcher (22) located therebehind, the stone-catcher (21) and the tops-catcher (22) being constructed separate from each other and the stone-catcher (21) consisting of a peripheral catching ring (45) on the inside of the main drum (41; 106) for receiving stones and a plurality of channel sections (46) associated with the catching ring (45), at one end respectively of which channel sections are located lift openings (47) directed radially inwards and at their other end respectively water-receiving compartments (51), through which lifting water can be supplied to the channel sections (46) and thus to the lift openings (47).

2. Apparatus according to Claim 1, characterised in that the water-receiving compartments (51) extend substantially in the longitudinal direction of the main drum (41; 106) on the inside of the latter, in the region of the adjoining tops-catcher (22).

3. Apparatus according to Claim 1 or 2, characterised in that preceding or following the stone-catcher (21) and the directly adjoining tops-catcher (22) is a washing unit, which is constructed as a drum (washing drum 20) and is connected to the stone-catcher (21) or tops-catcher (22), in particular to the main drum (41) receiving the stone-catcher (21) and tops-catcher (22).

4. Apparatus according to Claim 3, characterised in that the washing drum (20) arranged coaxially with respect to the main drum (41) or to the stone-catcher (21) or tops catcher (22) has a smaller (outer) diameter than the main drum (41) and that the end of the washing drum (20) facing the main drum (41) projects into the latter, thereby forming a peripheral shoulder (overflow wall).

5. Apparatus according to Claim 3 or 4, characterised in that the washing unit (washing drum 20) consists of several, in particular two washing sections (27, 37), in which the mixture or the beets are subject to a cleaning treatment by water and mechanical cleaning tools.

6. Apparatus according to Claim 5, characterised in that arranged at the inlet side in the washing drum (20) is a screen washing drum (28) concentric therewith, having a smaller diameter than the washing drum (20) for receiving the mixture.

7. Apparatus according to Claim 6, characterised in that the screen washing drum (28) is constructed with a (funnelshaped) cross-section diverging in the conveying direction.

8. Apparatus according to Claim 6 or 7, characterised in that the screen washing drum (28) consists of individual screen rings (30) arranged at a distance apart.

9. Apparatus according to Claim 8, characterised in that the screen rings (30) of the screen washing drum (28) consist of open-ended round section members (semi-circular profiles), whereof the ends are arranged at a (radial) distance apart.

10. Apparatus according to one of Claims 5 to 9, characterised in that in the region of the first washing section (27) in the washing drum (20), in particular in the region of the screen washing drum (28), water can be supplied under pressure to the mixture introduced (pre-washing), in particular through at least one nozzle tube (33), to which downwardly directed, substantially radial spray nozzles (34) are connected.

11. Apparatus according to one of Claims 5 to 10, characterised in that in the region of the first washing section (27) (screen washing drum 28), the washing drum (20) is constructed in a conical manner - diverging in the conveying direction.

12. Apparatus according to one of Claims 3 to 11, characterised in that located inside the main drum (41) adjoining the washing drum (20) is an inner drum (43) connected thereto, in the region of which the stone-catcher (21) is formed.

13. Apparatus according to Claim 12, characterised in that an annular water chamber, in particular a return chamber (70) is formed between the main drum (41) and the inner drum (43).

14. Apparatus according to Claim 12 or 13, characterised in that the inner drum (43) has a larger diameter than the washing drum (20), in which case a radially directed wall (overflow wall 44) on the side facing the washing drum forms a (gap-like or aperture-like) overflow (42) into the inner drum (43).

15. Apparatus according to Claim 13 or 14, characterised in that located in the return chamber (70) are conveying means for the water in the opposite direction to the conveying direction of the beets etc., in particular a stationary conveying worm (73).

16. Apparatus according to one or more of Claims 1 to 15, characterised in that the tops-catcher is constructed as a (cylindrical) drum with tops-catching members (81; 94) on the inner side of the drum which is permeable to water and in particular is in the form of a screen (drum sections 58; 59).

17. Apparatus according to Claim 16, characterised in that the tops-catcher (22) constructed as a drum is formed directly adjacent to the stone-catcher (21) as a continuation thereof, in particular concentrically within the main drum (41).

18. Apparatus according to Claim 16 or 17, characterised in that the tops-catcher members arranged on the inside of the drum-shaped tops-catcher (22) are constructed as inwardly projecting entrainment means, preferably as entrainment bars (94) consisting of flat material and which are approximately triangular, which are constructed on an entrainment edge (95) located at the front in the direction of rotation with projections and recesses (in the shape of a saw tooth or undulating) for engaging the tops.

19. Apparatus according to Claim 18, characterised in that the tops entrained by the tops catching members (entrainment bars) (34) can be removed from the tops catching members by fixed stripping members, in particular by revolving stripping discs (96), preferably in the upper region of the topscatcher (22).

20. Apparatus according to one of Claims 16 to 19, characterised in that the tops-catching members (81) are mounted to move, in particular to tilt, on the inside of the drumlike tops-catcher (22) so that for dropping tops, the tops catching members (81) or parts thereof (catching bar 82) are able to move relative to the drum (drum sections 58; 59) in particular as a result of their own weight in the upper region of the tops-catcher (22).

21. Apparatus according to one of Claims 16 to 20, characterised in that the drum (drum sections 58; 59) of the topscatcher (22) is provided with openings, in particular is constructed in the manner of a grid.

22. Apparatus according to one of Claims 16 to 21, characterised in that the tops removed from the tops-catching members (81, 94) in the upper region of the drum (drum sections 58, 59) can be dropped by way of a tops-catching hopper (60) onto a conveyor belt (50) extending in the longitudinal direction.

23. Apparatus according to one or more of Claims 1 to 22, characterised in that the water-receiving compartments (51) are constructed with an increased volume, in particular by extending as far as a radial end wall (54) of the main drum and with a cross-section widening out towards the channel section (46).

24. Apparatus according to Claim 23, characterised in that the water-receiving compartments are located in the region of an annular collecting chamber (52) formed around the tops catcher (22) (drum sections 58; 59) for receiving water emerging from the tops-catcher (22).

25. Apparatus according to Claim 24, characterised in that the collecting chamber (52) is connected to the return chamber (70), in particular by a connecting gap (71) in the region between the catching ring (45) of the stone-catcher (21) and the inner drum (43).

26. Apparatus according to one of Claims 23 to 25, characterised in that part of the water emerging from the tops-catcher (22) and received by the collecting chamber (52) can be supplied by way of a discharge pipe (69) to a settling vessel or the like.

27. Apparatus according to Claim 26, characterised in that an overflow (overflow bores 67), in particular for supplying water to the discharge pipe (69) is formed in the region of a radial wall (68) at the end of the main drum (41) for limiting the collecting chamber (52) on the inside (facing the drum section 59).

28. Apparatus according to one or more of Claims 1 to 27, characterised in that the end part is constructed as a rewashing device (23) for the beets, with a re-washing drum (61) (permeable to water), which is preferably constructed to diverge in the conveying direction.

29. Apparatus according to one or more of Claims 12 to 28, characterised in that the washing drum (20) is constructed substantially with the same diameter as the inner drum (43), with a conical drum section (103) converging in the conveying direction, with a conveying device (conveying worm 104), being located between the inner drum (43) and the washing drum (20).

30. Apparatus according to one or more of Claims 1 to 29, characterised in that arranged in succession and connected to each other in the conveying direction of the mixture are first of all a stone-catcher (21), followed by a tops-catcher (22) and then a washing drum (20).

31. Apparatus according to Claim 30, characterised in that adjoining the washing drum (20) is a re-washing device (rewashing drum 61) with water collector (62), the water collected being able to be conveyed by way of a circulating pipe (113) and a nozzle tube (114) into the region of the washing drum (20).

32. Apparatus according to Claim 30 or 31, characterised in that the main drum (41) is formed by a half-drum (106) fixed to the floor and that provided in the region between the tops-catcher (22) and washing drum (20) in the outer half-drum (106) is an overflow (108), for the discharge of part of the water emerging from the tops-catcher (22) to the settling vessel.

33. Apparatus according to one or more of Claims 1 to 32, characterised in that the stone-catcher (21) comprising at least one catching ring (45) for receiving stones and several channel sections (46) associated therewith, with water-receiving compartments (51), comprises at least two drums (main drum 41, inner drum 43) arranged concentrically with respect to each other, between which the catching ring (45), the channel sections (46) and their water-receiving compartments (41) are located.

## Revendications

1. Dispositif pour l'épaillage d'une part et l'épierrage d'autre part de betteraves (sucrières) utilisant l'eau comme agent de lavage et de transport du mélange, au moyen d'un tambour principal (41) continu qui tourne dans sa totalité pour épierrer et épailler le mélange, caractérisé en ce que dans le tambour principal (41; 106) sont disposés un épierreur (21) et en-dessous de ce dernier un épailleur (22), l'épierreur (21) et l'épailleur (22) étant constitués séparément l'un de l'autre, et l'épierreur (21) consistant en un anneau de capture (45) faisant le tour de la paroi intérieure du tambour principal (41; 106) pour recueillir les pierres, anneau de capture (45) auquel sont adjointes plusieurs sections de canal (46), à l'extrémité de chacune desquelles sont disposées des ouvertures de poussée (47) tournées radialement vers l'intérieur et à l'autre extrémité de chacune desquelles sont disposées des trémies de réception d'eau (51), par lesquelles on peut introduire de l'eau de poussée dans les sections de canal (46) et par suite dans les ouvertures de poussée (47).

2. Dispositif selon la revendication 1, caractérisé en ce que les trémies réceptrices d'eau (51) s'étendent en substance dans le sens de la longueur du tambour principal (41; 106) à l'intérieur de celui-ci et à portée de l'épailleur (22) qui lui fait suite.

3. Dispositif selon la revendication 1 ou 2, caractérisé en ce qu'à l'épierreur (21) et à l'épailleur (22) qui lui fait suite immédiatement est adjointe en amont ou en aval une unité de lavage, qui est constituée d'un tambour (tambour de lavage 20) qui est relié à un épierreur (21) ou à un épailleur (22), en particulier au tambour principal (41) qui contient l'épierreur (21) et l'épailleur (22).

4. Dispositif selon la revendication 3, caractérisé en ce que le tambour de lavage (20) installé dans le même axe que le tambour principal (41) ou que l'épierreur (21) ou l'épailleur (22) présente un diamètre (extérieur) plus petit que celui du tambour principal (41) et que le bord de l'extrémité du tambour de lavage (20) tournée vers le tambour principal (41) est redressé dans ce dernier de façon à former une séparation qui en fait tout le tour (déversoir).

5. Dispositif selon la revendication 3 ou 4, caractérisé en ce que l'unité de lavage (tambour de lavage 20) se compose de plusieurs, en particulier de deux, sections de lavage (27, 37), dans lesquelles le mélange ou les betteraves sont soumis à une opération de nettoyage par l'eau et par des dispositifs mécaniques de nettoyage.

6. Dispositif selon la revendication 5, caractérisé en ce que du côté de l'entrée du tambour de lavage (20) est disposé concentriquement à celui-ci un tambour de lavage au crible (28) ayant un diamètre plus petit que le tambour de lavage (20) pour la réception du mélange.

7. Dispositif selon la revendication 6, caractérisé en ce que le tambour de lavage au crible (28) à une forme de section divergente (forme d'entonnoir).

8. Dispositif selon la revendication 6 ou 7, caractérisé en ce que le tambour de lavage au crible (28) est formé d'anneaux de tamisage (30) individuels disposés à une certaine distance l'un de l'autre.

9. Dispositif selon la revendication 8, caractérisé en ce que l'anneau de tamisage (30) du tambour de lavage au crible (28) est constitué d'une pièce à profil partiellement circulaire (profil semicirculaire) dont les extrémités sont disposées à une certaine distance (radiale) l'une de l'autre.

10. Dispositif selon l'une des revendications 5 à 9, caractérisé en ce que, à portée de la première section de lavage (27) dans le tambour de lavage (20), en particulier à portée du tambour de lavage au crible (28), on peut ajouter au mélange de l'eau sous pression (prélavage), en particulier au moyen d'au moins une buse (33), à laquelle est relié un pulvérisateur (34) en substance radial, tourné vers le bas.

11. Dispositif selon l'une des revendications 5 à 10, caractérisé en ce que le tambour de lavage (20) possède une forme cônique dans la zone de la première section de lavage (27) (tambour de lavage au crible 28) - divergente en direction du transport.

12. Dispositif selon l'une des revendications 3 à 11, caractérisé en ce qu'un tambour intérieur (43) est disposé à l'intérieur du tambour principal (41), qui fait suite au tambour de lavage (20), et qui est relié au tambour principal et que l'épierreur (21) est placé à portée du tambour intérieur.

13. Dispositif selon la revendication 12, caractérisé en ce que, entre le tambour principal (41) et le tambour intérieur (43), on forme une chambre de lavage annulaire, en particulier une chambre de refoulement (70).

14. Dispositif selon la revendication 12 ou 13, caractérisé en ce que le tambour intérieur (43) présente un diamètre supérieur à celui du tambour de lavage (20), ce qui forme une paroi orientée radialement (déversoir 44) sur laquelle le côté tourné vers le tambour de lavage forme un déversoir (42) (en forme de fente ou d'orifice) dans le tambour intérieur (43).

15. Dispositif selon la revendication 13 ou 14, caractérisé en ce que dans la chambre de refoulement (70) sont disposés des moyens d'acheminement de l'eau en sens contraire du sens de transport des betteraves etc., en particulier une hélice transporteuse (73) montée à demeure.

16. Dispositif selon l'une ou plusieurs des revendications 1 à 15, caractérisé en ce que l'épailleur est en forme de tambour (cylindrique) muni d'organes d'épaillage (81; 94), à l'intérieur du tambour perméable à l'eau, en particulier du tambour en forme de tamis (sections de tambour 58; 59).

17. Dispositif selon la revendication 16, caractérisé en ce que l'épailleur (22) en forme de tambour est directement raccordé à l'épierreur (21) et en constitue la continuation, en particulier concentriquement à l'intérieur du tambour principal (41).

18. Dispositif selon la revendication 16 ou 17 caractérisé en ce que les organes d'épaillage disposés à l'intérieur de l'épailleur (22) en forme de tambour, sont en forme de tenons d'entraînement saillant vers l'intérieur, constitués de préférence d'ailettes d'entraînement (94) en matériau plat et de forme approximativement triangulaire, dont une arête d'entraînement (95) tournée dans le sens de rotation est munie de saillies et de creux (en forme de dents de scie ou d'ondulations) afin de pouvoir saisir les pailles, feuilles, etc.

19. Dispositif selon la revendication 18, caractérisé en ce que les pailles, feuilles, etc. entraînées par les organes d'épaillage (tenons d'entraînement) (34) peuvent être détachées des organes d'épaillage par des organes râcleurs fixes, en particulier par des disques râcleurs (96), de préférence dans la zone supérieure de l'épailleur (22).

20. Dispositif, selon l'une des revendications 16 à 19 caractérisé en ce que les organes épailleurs (81) sont installés de façon mobile, en particulier de façon inclinable à l'intérieur de l'épailleur en forme de tambour (22), de telle sorte que les organes d'épaillage (81) ou des parties de ceux-ci (barres d'épaillage) (82) soient mobiles par rapport au tambour (sections de tambour 58; 59) afin de faire tomber les pailles, feuilles, etc., en particulier sous l'effet de leur propre poids, dans la partie supérieure de l'épailleur (22).

21. Dispositif selon les revendications 16 à 20, caractérisé en ce que le tambour (sections de tambour 58; 59) de l'épailleur (22) est muni d'ouvertures, en particulier en forme de grille.

22. Dispositif selon l'une des revendications 16 à 21, caractérisé en ce que les pailles, feuilles, etc. détachées des organes d'épaillage (81, 94) dans la zone supérieure du tambour (sections du tambour 58, 59) peuvent être éliminées via un entonnoir d'épaillage (60) vers une bande transporteuse (50) disposée dans le sens de la longueur.

23. Dispositif selon l'une ou plusieurs des revendications 1 à 22, caractérisé en ce que les trémies de réception d'eau (51) possèdent un volume croissant, en particulier parce qu'elles s'étendent jusqu'à une paroi de fond radiale (54) du tambour principal avec une section croissante en direction de la section des canaux (46).

24. Dispositif selon la revendication 23, caractérisé en ce qu'on adjoint des chambres de collecte annulaires (52) en vue de recueillir l'eau sortant de l'épailleur (22) aux trémies de réception d'eau qui se forment dans la zone d'un des épailleurs (22) (sections de tambour 58; 59).

25. Dispositif selon la revendication 24, caractérisé en ce que la chambre de collecte (52) est reliée à la chambre de refoulement (70), en particulier au moyen d'une fente de liaison (71) dans la zone entre l'anneau de capture (45) de l'épierreur (21) et le tambour intérieur (43).

26. Dispositif selon l'une des revendications 23 à 25, caractérisé en ce qu'une partie de l'eau sortant de l'épailleur (22) et recueillie par la chambre de collecte (52) peut être dirigée via une conduite d'évacuation (69) vers un bassin de décantation ou dispositif similaire.

27. Dispositif selon la revendication 26, caractérisé en ce que dans la zone d'une paroi radiale (68) à l'extrémité du tambour principal (41) on forme, afin de délimiter la chambre de collecte (52), à l'intérieur un déversoir (tourné en direction de la section de tambour 59) (orifice de débordement 67), en particulier en vue de diriger l'eau vers la conduite d'évacuation (69).

28. Dispositif selon l'une ou plusieurs des revendications 1 à 27, caractérisé en ce que la partie terminale forme un dispositif de relavage (23) pour les betteraves au moyen d'un tambour de relavage (61) (perméable à l'eau), qui a de préférence une forme divergente dans le sens du transport.

29. Dispositif selon l'une ou plusieurs des revendications 12 à 28, caractérisé en ce que le tambour de relavage (20) a un diamètre essentiellement en substance égal à celui du tambour intérieur (43), une section de tambour cônique (103), convergent dans le sens du transport, munie d'un dispositif de transport (hélice transporteuse 104) étant adjointe entre le tambour intérieur et le tambour de lavage (20).

30. Dispositif selon l'une ou plusieurs des revendications 1 à 29, caractérisé en ce que, dans le sens du transport du mélange, on dispose en premier lieu un épierreur (21), ensuite un épailleur (22) et enfin un tambour de lavage (20) l'un à la suite de l'autre et reliés entre eux.

31. Dispositif selon la revendication 30, caractérisé en ce qu'un dispositif de relavage (tambour de relavage 61) soit raccordé au tambour de lavage (20) avec collecteur d'eau, l'eau recueillie pouvant être dirigée via une conduite de recyclage (113) et une buse (114) vers la zone du tambour de lavage (20).

32. Dispositif selon la revendication 30 ou 31, caractérisé en ce que le tambour principal (41) est formé d'un demi-tambour fixe (106) et que dans la zone entre l'épailleur (22) et le tambour de lavage (20), on ménage dans le demi-tambour extérieur (106) un déversoir (108), pour l'évacuation d'une partie de l'eau sortant de l'épailleur (22) vers le bassin de décantation.

33. Dispositif selon l'une ou plusieurs des revendications 1 à 32, caractérisé en ce qu'au moins un anneau de capture (45), destiné à éliminer les pierres, et plusieurs des épierreurs (21) présentant des sections de canal (46), munies de trémies collectrices d'eau (51), qui leur sont adjointes présentent au moins deux tambours disposés concentriquement l'un par rapport à l'autre (tambour principal 41, tambour intérieur 43), entre lesquels sont disposés l'anneau de capture (45), les sections de canaux (46) et leurs trémies collectrices d'eau (41).

Fig. 1

0 129 638

VI

VII IX

20

43 41

49 21 22 23 61

25 Rüben kraut steine 24 26 28 33 38 29 60 65

50

76

74

32

27 37

36 34 32 39 35 40 42 44 73 58 59 75 69 64 32 62 63

3

z. Klärbecken
Klärbecken

steine kraut

VI

VII IX

Fig. 2

Fig. 3

# Fig. 4

Fig.5

0 129 638

Fig. 6

Fig. 7

steine

11

Fig.8

Fig. 9

Fig. 11

Fig. 10

Fig.13

Fig. 12

Fig.14

Fig. 15

Fig. 16